# EUROPÄISCHE PATENTSCHRIFT

(11) **EP 1 736 846 B1**
(45) Veröffentlichungstag und Bekanntmachung des Hinweises auf die Patenterteilung: **10.11.2010**
(21) Anmeldenummer: 06012572.1
(22) Anmeldetag: 20.06.2006
(51) Int. Cl.: G05G 5/03, G05G 9/047

(54) **Stellglied, insbesondere in der Art eines elektrischen Schalters**
Actuator, in particular of the electric switch type
Actionneur, en particulier de type commutateur électrique

(30) Priorität: 24.06.2005 DE 102005029392; 24.06.2005 DE 102005029394
(43) Veröffentlichungstag der Anmeldung: 27.12.2006
(73) Patentinhaber: Marquardt GmbH, 78604 Rietheim-Weilheim (DE)
(72) Erfinder: Buschle, Roland, 78570 Mühlheim-Stetten (DE)
(74) Vertreter: Otten, Herbert

(56) Entgegenhaltungen:
- DE-A- 19 825 479
- DE-A1- 10 304 804
- US-A- 4 342 335
- US-A- 4 777 981
- US-A- 4 827 982
- US-A- 5 275 065
- US-A1- 2004 164 959
- US-A1- 2005 028 634
- US-B1- 6 181 327
- US-B1- 6 538 639

## Beschreibung

Die Erfindung betrifft ein Stellglied nach dem Oberbegriff des Patentanspruchs 1,

Stellglieder, wie in der Art eines Joystick- oder Cursor-Schalters ausgebildete elektrische und/oder elektronische Schalter, dienen zur Eingabe von Daten für ein elektrisches Gerät durch einen Benutzer. Beispielsweise werden solche Schalter für Autoradios, Navigationsgeräte, Bordcomputer oder auch zur manuellen Steuerung sonstiger Funktionen in Kraftfahrzeugen verwendet, Insbesondere läßt sich ein solches Stellglied auch als elektronischer Gangwahlschalter für ein durch Shift by Wire gesteuertes Getriebe im Kraftfahrzeug verwenden.

Ein derartiges als elektrischer Schalter ausgebildetes Stellglied ist aus der US-A-4 459 440 bekannt. Dieser Schalter besitzt eine mit Verschwenkmitteln zusammenwirkende, manuell vom Benutzer bewegbare Handhabe, so daß die Handhabe in zwei aufeinander senkrecht stehenden Verschwenkebenen jeweils in zwei Richtungen in der Art einer Windrose aus einer neutralen Stellung in Schwenkstellungen verschwenkbar ist.

In der Schwenkstellung wirkt die Handhabe auf ein Schaltelement betätigend ein. Insoweit handelt es sich bei dem Schaltelement um ein Modul zur Ausführung einer Aktion, und zwar vorliegend das Einschalten des Schaltelements oder mit anderen Worten zur Erzeugung eines Schaltsignals. Die Schwenkstellung kann, was allerdings in diesem Dokument nicht weiter erwähnt ist, als Raststellung ausgebildet sein, derart daß eine Rastkraft in der Schwenkstellung auf die Handhabe einwirkt, womit die Handhabe in der Schwenkstellung festgehalten ist.

In der US-A-4 459 440 sind somit zur Ausbildung einer Raststellung sowie zur Ausbildung sonstiger Module keine näheren Angaben gemacht. Desweiteren gibt der bekannte Schalter keinen Hinweis auf die Realisierung von ergonomischen Erfordernissen im Hinblick auf die Rastkraft sowie im Hinblick auf die Anordnung von Modulen, insbesondere solche, die für den Einsatz im Kraftfahrzeug wünschenswert sind. Schließlich ist auch nicht weiter ersichtlich, ob dieser Schalter zum Einsatz in einem Kraftfahrzeug mit beengten Einbauräumen geeignet ist.

Weiter ist aus der US-A-4 342 335 ein Hydraulik-Steuerventil mit einer verschwenkbaren Handhabe zur Verstellung von Ventilkolbenanordnungen bekannt. Die Handhabe wirkt beim Verschwenken auf verschiebbare Arbeitskolben ein, die wiederum die Ventilkolbenanordnungen entsprechend verstellen. Mit den Arbeitskolben wirkt ein Arretierungsmechanismus zusammen, so daß die Schwenkstellung der Handhabe als Raststellung ausgebildet ist. Bei der vom Arretierungsmechanismus erzeugten Rastkraft kann es sich um eine Magnetkraft handeln.

Ein ebenfalls mit einer magnetischen Rastkraft arbeitendes Hydraulik-Steuerventil ist auch aus der US-A-4 777 981 sowie der US-A-4 827 982 bekannt. Mit Magnetkraft arbeitende Joystick-Anordnungen sind in der DE 103 04 804 A1 und in der US 2004/0164959 A1 beschrieben. Rein mechanisch arbeitende Joystick-Anordnungen gehen schließlich aus der US 6 181 327 B1 und aus der US 6 538 639 B1 näher hervor.

Der Erfindung liegt die Aufgabe zugrunde, das Stellglied im Hinblick auf die Rastierung weiterzubilden, insbesondere indem die Handhabe stromlos in einer definierten Lage fixierbar ist. Bevorzugterweise soll die Rastierung derart ausgestaltet werden, daß die Ergonomie für das mit hoher Funktionalität versehene Stellglied gesteigert ist, wobei das Stellglied insbesondere jedoch mit kleinem Bauraum auskommen soll.

Desweiteren liegt der Erfindung die Aufgabe zugrunde, das Stellglied im Hinblick auf die Betätigung des Moduls, gegebenenfalls auch auf die Anordnung von Modulen weiterzubilden, insbesondere indem die Handhabe zum Steuern von mehreren, beispielsweise vier, funktional und gegenständlich voneinander getrennten Modulen geeignet ist. Bevorzugterweise soll die Anordnung der Module derart ausgestaltet werden, daß die Ergonomie für das mit hoher Funktionalität versehene Stellglied gesteigert ist, wobei das Stellglied insbesondere jedoch mit kleinem Bauraum auskommen soll.

Diese Aufgabe wird bei einem gattungsgemäßen Stellglied durch die kennzeichnenden Merkmale des Anspruchs 1 gelöst.

Beim erfindungsgemäßen Stellglied ist die Rastkraft durch eine Magnetkraft erzeugt. Vorteilhafterweise erhält man dadurch eine hohe, gegebenenfalls veränderliche Rastkraft bei geringem Energiebedarf.

In konstruktiv einfacher Weise läßt sich die Magnetkraft durch das Zusammenwirken eines magnetisierbaren Haftkörpers mit einem Permanentmagneten erzeugen, Die Rastkraft wird dann in der Raststellung durch die Magnetkraft zwischen dem Permanentmagnet und dem Haftkörper bewirkt. Der Haftkörper steht dabei mit dem Permanentmagnet derart in Zusammenwirkung, daß der Haftkörper in der neutralen Stellung der Handhabe im wesentlichen außerhalb des Wirkungsbereichs des Permanentmagneten befindlich ist, wobei eine allenfalls geringfügige Magnetkraft auf die Handhabe einwirkt. In der Schwenkstellung hingegen ist der Haftkörper im wesentlichen innerhalb des Wirkungsbereichs des Permanentmagneten befindlich, wobei die Magnetkraft als Rastkraft auf die Handhabe einwirkt.

Zur Lösung der Rastung in der Schwenkstellung dient ein Elektromagnet. Der Elektromagnet wirkt mit dem Permanentmagneten derart zusammen, daß zur Lösung des Haftkörpers ein Gegenmagnetfeld erzeugbar ist. Durch Bestromung des Elektromagneten löst sich die Verbindung. Folglich ist in effizienter Weise lediglich zum Lösen der Rastung ein kurzzeitiger Energiebedarf notwendig.

Weitere Ausgestaltungen der Erfindung sind Gegenstand der Unteransprüche.

Beim erfindungsgemäßen Stellglied gemäß einer weiteren Ausbildung ist an der Handhabe ein der Schwenkstellung zugeordnetes Übertragungselement derart angelenkt, daß die Kipp- bzw. Verschwenkbewegung der Handhabe im wesentlichen in eine Linearbewegung des übertragungselements umgewandelt wird. Das Übertragungselement wirkt in der Schwenkstellung der Handhabe auf das Modul betätigend ein. Vorteilhafterweise bietet dadurch das Stellglied dem Benutzer eine ergonomische Handhabung und ist dennoch sehr kleinbauend ausgestaltet, Bevorzugterweise besitzt die Handhabe wenigstens zwei Schwenkstellungen, insbesondere jedoch vier Schwenkstellungen, so daß vier Module unabhängig voneinander mittels vier Übertragungselementen in der jeweiligen Schwenkstellung betätigbar sind.

Eine kompakte Ausgestaltung des Stellglieds wird dadurch erzielt, daß das Verschwenkmittel aus einem in mehreren Richtungen beweglichen Drehkörper besteht. Die Handhabe ist mittels des Drehkörpers beweglich gelagert, indem die Handhabe in etwa radial abstehend am Drehkörper angeordnet ist. Der Drehkörper kann wiederum in der Art eines Kugelgelenks in einer Lagerschale gelagert sein. Weiter kann am Drehkörper ein der Handhabe ungefähr gegenüberliegender, in etwa radial abstehender Ansatz angeordnet sein, der in einer Kulisse geführt ist, um so eine exakte Bewegung für die Handhabe zu gewährleisten. Um die Ergonomie für den Benutzer zu steigern, kann mittels der Kulisse eine Haptik für die manuelle Bewegung der Handhabe erzeugbar sein. Mit der Handhabe wirkt hierfür auch eine am abstehenden Ansatz angeordnete Rückstellfeder zur Rückstellung in die neutrale Stellung zusammen.

Zur weiteren Kompaktifizierung ist am Drehkörper ein Stift, insbesondere mit einem runden Querschnitt angebracht. Der Stift durchgreift eine Aussparung in der Lagerschale und greift, beispielsweise mittels eines verjüngten Endes, in eine Bohrung am Haftkörper und/oder am Übertragungselement ein. Der Haftkörper und/oder das Übertragungselement ist in einer Nut linear geführt. Die Bohrung ist mit einer Fase, einem Radius o. dgl. versehen, wobei die Fase, der Radius o. dgl. größer als der maximale Dreh- bzw. Verschwenkwinkel des Drehkörpers ist, wodurch eine Behinderung der Verschwenkung ausgeschlossen ist.

Beim Verschwenken bewegt die Handhabe den Haftkörper derart, daß der Haftkörper in und/oder außerhalb des Wirkungsbereichs des Permanentmagneten bringbar ist. Falls gewünscht kann die Magnetkraft auch über einen zwischen dem Permanentmagnet und dem Haftkörper befindlichen Luftspalt wirken. Es bietet sich an, daß der Elektromagnet eine Spule und einen Anker umfaßt. Durch Bestromung des Elektromagneten kann das Stellglied mittels der Rückstellfeder wieder in seine Ausgangslage gebracht werden. Zweckmäßigerweise ist in kompakter Ausgestaltung der Permanentmagnet am Elektromagnet angeordnet.

Ist eine große Rastkraft gewünscht, so kann der Permanentmagnet aus einem Neodym-Bor-Seltenerdmagnet bestehen. Der Haftkörper ist in der Art eines Trägers aus Kunststoff ausgestaltet und nimmt ein Magnet-Flußleitstück aus magnetisierbarem Metall auf. Der Träger ist in der Nut spielarm geführt. Das Übertragungselement kann ebenso aus Kunststoff bestehen und ist in der Nut spielarm geführt. Zur Geräuschreduzierung für das Anschlagen des Haftkörpers am Permanentmagnet und/oder für das Zurückstellen in die neutrale Stellung wirkt ein Dämpfungselement mit der Handhabe zusammen. Das Dämpfungselement ist beispielsweise am abstehenden Ansatz angebracht.

Bei dem Modul kann es sich beispielsweise um ein Schaltelement, Sensorelement, Signalelement o. dgl. zur Erzeugung eines Schaltsigals handeln. In diesem Fall besteht das Sensorelement bevorzugterweise aus wenigstens einer magnetisierten Codcplatte sowie wenigstens einem zugeordneten Hallsensor. Zweckmäßigerweise ist die Codeplatte am Übertragungselement befestigt. Ein derartiges Sensorelement ist der Linearbewegung des Übertragungselements besonders angepaßt.

In einer weiteren Ausgestaltung handelt es sich bei dem Modul um ein Riegelelement. Dadurch ist die Handhabe in der Schwenkstellung verriegelbar. Das Riegelelement ist zweckmäßigerweise am Übertragungselement befestigt und/oder wirkt mit dem Übertragungselement zusammen.

Bei wiederum einer anderen Ausführung handelt es sich bei dem Modul um ein Rastelement. Dadurch ist die Handhabe in der Schwenkstellung verrastbar. Das Rastelement ist zweckmäßigerweise am Übertragungselement befestigt und/oder wirkt mit dem Übertragungselement zusammen.

Das erfindungsgemäße Stellglied eignet sich besonders als Betätigungsorgan für einen elektrischen und/oder elektronischen Schalter, der insbesondere in der Art eines Joystick- oder Cursor-Schalters ausgestaltet ist. Beispielsweise kann ein solcher elektrischer Schalter als Gangwahlschalter für ein Kraftfahrzeug Verwendung finden.

Bei einem solchen elektrischen Schalter ist die Schwenkstellung des Stellglieds als Schaltstellung ausgebildet, derart daß das Stellglied als Betätigungsorgan in der Schaltstellung auf ein Schaltelement, Sensorelement, Signalelement o. dgl. betätigend zur Erzeugung eines Schaltsignals einwirkt. Zweckmäßigerweise kann ebenso bei einem solchen Gangwahlschalter das Sensorelement aus wenigstens einer magnetisierten Codeplatte sowie wenigstens einem zugeordneten Hallsensor bestehen. Die Codeplatte ist derart an das Stellglied angelenkt, daß die Kipp-bzw. Verschwenkbewegung des Stellglieds in eine Linearbewegung der Codeplatte umgewandelt wird. Diese lineare Bewegung der Codeplatte wird dann durch die diesbezüglichen Hall-Sensoren erfaßt. Für einen Gangwahlschalter genügen dann sieben Sensoren in x-Richtung sowie fünf Sensoren in y Richtung, um die manuelle Anwahl sämtlicher Gänge zu gestatten. Ein solcher Schalter bietet trotz einfacher Bauweise eine hohe Funktionalität, wobei die Elemente für die Signalerfassung keine Mißbrauchskräfte aufnehmen.

Zusammenfassend ist eine besonders vorteilhafte erste Ausgestaltung für das Stellglied darin zu sehen, daß die Handhabe durch einen in mehreren Richtungen beweglichen Drehkörper gelagert ist An dem Drehkörper ist ein Stift mit rundem Querschnitt angebracht. Dieser greift in die Bohrung eines linear geführten Hartkörpers. Die Bohrung ist mit einer Fase, die größer als der Drehwinkel ist, bzw. mit einem entsprechenden Radius versehen. Durch Rotation des Drehkörpers wird der Haßkörper auf einen Permanent-Haftmagneten geschoben, wobei das System stromlos haftet. Durch Bestromung löst sich die Verbindung, die Handhabe kann mit einer Rückstellfeder wieder in ihre Ausgangslage gebracht werden. Mittels eines oder mehrerer Dämpfelemente erfolgt eine Geräuschreduzierung beim Anschlagen der beiden Bauteile.

Eine solche Ausbildung realisiert nachfolgende Randbedingungen. Zum einen wird durch kurze Bestromung der Einheit die Rastierung gelöst. Zum anderen erfolgt eine geräuscharme Fixierung der Handhabe in einer Drehachse. Schließlich ist eine Bewegung der anderen Drehachsen weiterhin möglich.

Zusammenfassend ist eine besonders vorteilhafte zweite Ausgestaltung für das Stellglied darin zu sehen, daß das Stellglied durch einen in mehreren Richtungen beweglichen Drehkörper gelagert ist. Durch Aussparungen in der Lagerschale bewegen vier Schaltarme verschiedene Module im Schalter. Ein weiteres Modul ist als Kulisse ausgelegt, in das ein fünfter Schaltarm als Taststift eingreift. Mit ihr wird das Stellglied geführt und die Drehhaptik erzeugt. Durch die Abstützung der Druckfeder an der Lagerschale, sowie des in Wirkrichtung der Feder frei am Ansatz gelagerten Taststiftes, entsteht in der Lagerstelle keine unerwünschte Reibung. Bei Rotation des Stellgliedes um eine Achse verändern mindestens drei Schaltarme ihre Lage. Bei Rotation des Stellgliedes um zwei Drehachsen verändern alle fünf Schaltarme ihre Lage. Durch besonders ausgeformte Aufnahmen an den Modulen kann die mehrfach rotatorische Bewegung des Schaltarms in eine Linearbewegung geändert werden. Auf diese Weise können lineargeführte Module, beispielsweise vier solcher Module, angesteuert werden. Die Position der Module im Schalter kann bei gleichen Schaltarmen nach Wunsch verändert werden.

Eine solche Ausbildung realisiert nachfolgende Randbedingungen. Zum einen kann bei Rotation des Stellgliedes um die Drehachse die Winkelstellung mehrerer Drehachsen erkannt werden. Zum anderen ist bei Rotation des Stellgliedes um die Drchachse eine beliebige Drehhaptik erzeugbar. Desweiteren sind je nach Ausführung funktional und gegenständlich getrennte Module steuerbar. Dabei ist die Position der Module im Schalter veränderbar. Schließlich soll in der Lagerstelle keine bzw. nur eine geringe Reibung herrschen.

Die mit der Erfindung erzielten Vorteile bestehen insbesondere darin, daß das Stellglied trotz hoher Funktionalität mit geringem Platzbedarf auskommt. Damit ist das Stellglied für enge Bauräume, wie sie im Armaturenbrett, der Mittelkonsole, der Armlehne o. dgl. im Kraftfahrzeug gegeben sind, geeignet. Weiter ist das Stellglied fehlerunanfällig und besitzt eine hohe Lebensdauer. Das erfindungsgemäße Stellglied läßt sich somit vorteilhaft in rauhen Umgebungsbedingungen, beispielsweise in Kraftfahrzeugen, einsetzen, Außerdem weist das Stellglied eine gute Haptik auf. Trotz hoher Funktionalität ist das Stellglied einfach zu bedienen, wobei Fehlbedienungen weitgehend ausgeschlossen sind. Schließlich ist das Stellglied auch kostengünstig herzustellen.

Weitere Vorteile sind darüberhinaus in Folgendem zu sehen:
- Es ist eine geräuscharme Verricgelung und/oder Fixierung des Stellglieds ermöglicht.
- Es handelt sich um eine verschleißfreie Konstruktion.
- Die Haltekraft entsteht erst unmittelbar vor Erreichen der gewünschten Schaltposition.
- Die Rückstellung durch Bestromung der Spule sowie Aufhebung des magnetischen Feldes kann beliebig oft vorgenommen werden.
- Es ist keine Dauerbestromung des Systems notwendig.
- Eine Bewegung des Stellgliedes in den anderen Drehachsen ist möglich.
- Es ist die Erzeugung einer veränderbaren Fixierkraft bzw. Resthaltekraft ermöglicht.
- Das System erfordert lediglich eine geringe Teilezahl.
- Es handelt sich um einen platzsparenden Aufbau.
- Das Stellglied besitzt eine reibungsarme Lagerung.
- Es erfolgt eine Spielreduzierung durch direkte Übertragung der Bewegungen.

Ein Ausführungsbeispiel der Erfindung mit verschiedenen Weiterbildungen und Ausgestaltungen ist in den Zeichnungen dargestellt und wird im folgenden näher beschrieben. Es zeigen
Fig. 1 ein Stellglied, wobei die Handhabe in neutraler Stellung befindlich ist,
Fig. 2 das Stellglied, wobei die Handhabe in Schwenkstellung befindlich ist,
Fig. 3 schematisch die Handhabe mit dem Rastelement,
Fig. 4 das Stellglied in Seitenansicht und Draufsicht,
Fig. 5 das Stellglied in perspektivischer Ansicht mit vergrößertem Detailausschnitt,
Fig. 6 das Stellglied in perspektivischer Ansicht mit vergrößertem weiteren Detailausschnitt,
Fig. 7 das Stellglied in perspektivischer Ansicht mit vergrößertem nochmaligen weiteren Detailausschnitt,
Fig. 8 das Stellglied in einer weiteren perspektivischen Ansicht,
Fig. 9 einen elektrischen Schalter, der ein Stellglied wie in Fig. 1 aufweist, und
Fig. 10 schematisch das Stellglied zur Steuerung von Modulen.

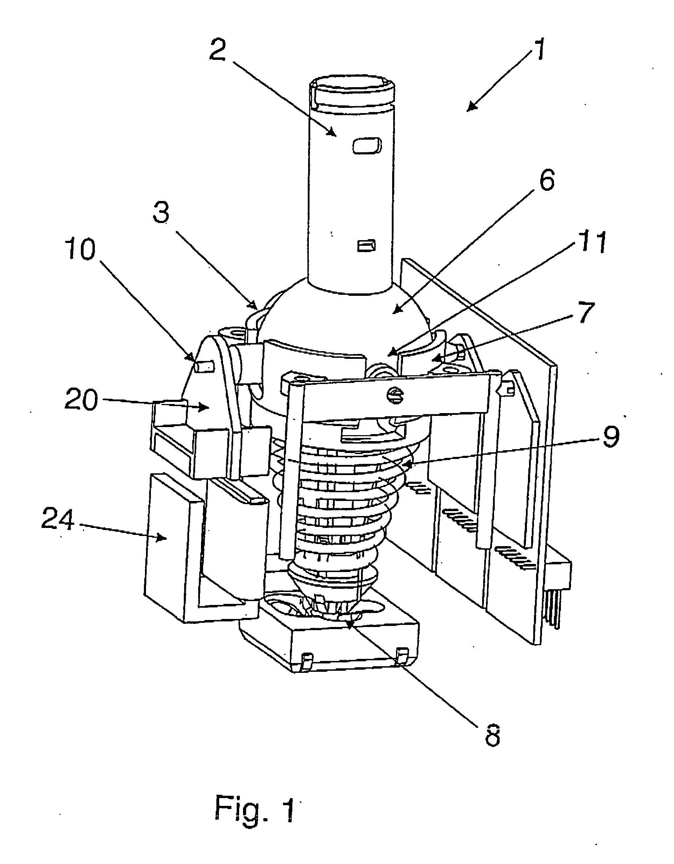

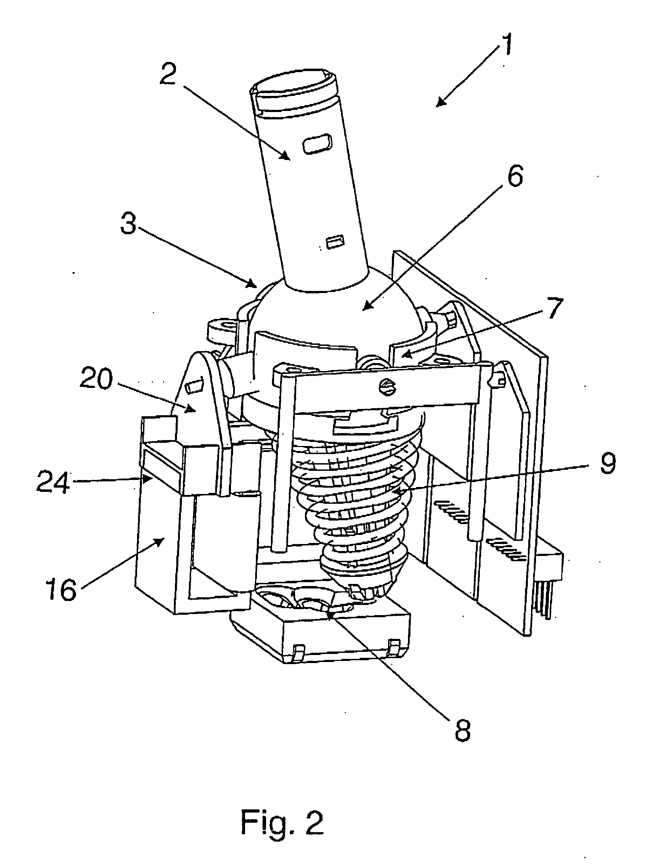

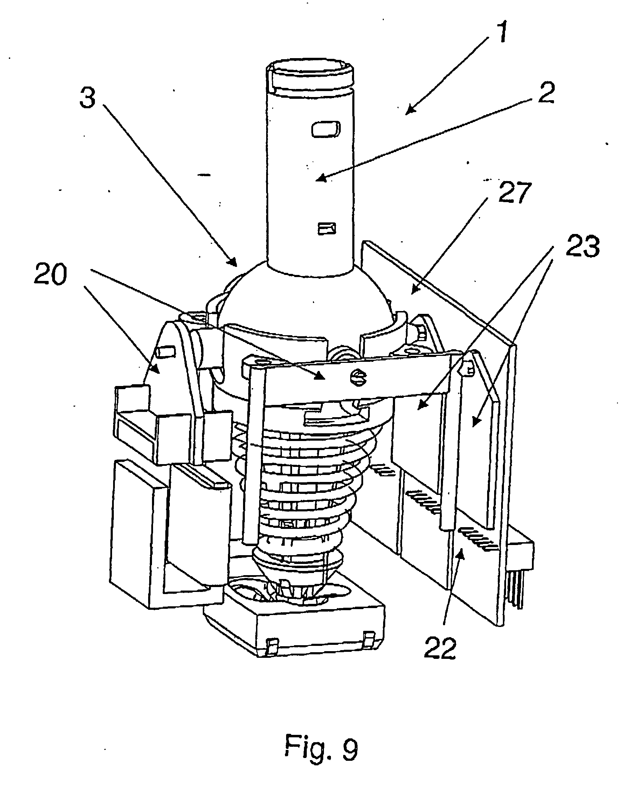

In Fig. 1 und Fig. 2 ist ein Stellglied 1 mit einer manuell vom Benutzer bewegbaren Handhabe 2 gezeigt. Das Stellglied 1, das beispielsweise als Gangwahlschalter entsprechend der Fig. 9 in einem Kraftfahrzeug Verwendung findet, besitzt Verschwenkmittel 3. Die Handhabe 2 wirkt mit den Verschwenkmitteln 3 derart zusammen, daß die Handhabe 2 in einer Verschwenkebene in wenigstens eine Richtung aus einer in Fig. 1 gezeigten neutralen Stellung in eine in Fig. 2 sichtbare Schwenkstellung verschwenkbar ist. Die Schwenkstellung ist als Raststellung ausgebildet, derart daß eine Rastkraft in der Schwenkstellung auf die Handhabe 2 einwirkt. Dadurch ist die Handhabe 2 in der Schwenkstellung mit der Rastkraft als Haltekraft festgehalten. Die Rastkraft ist durch eine Magnetkraft bewirkt, die wiederum durch ein Rastelement 24 erzeugt ist.

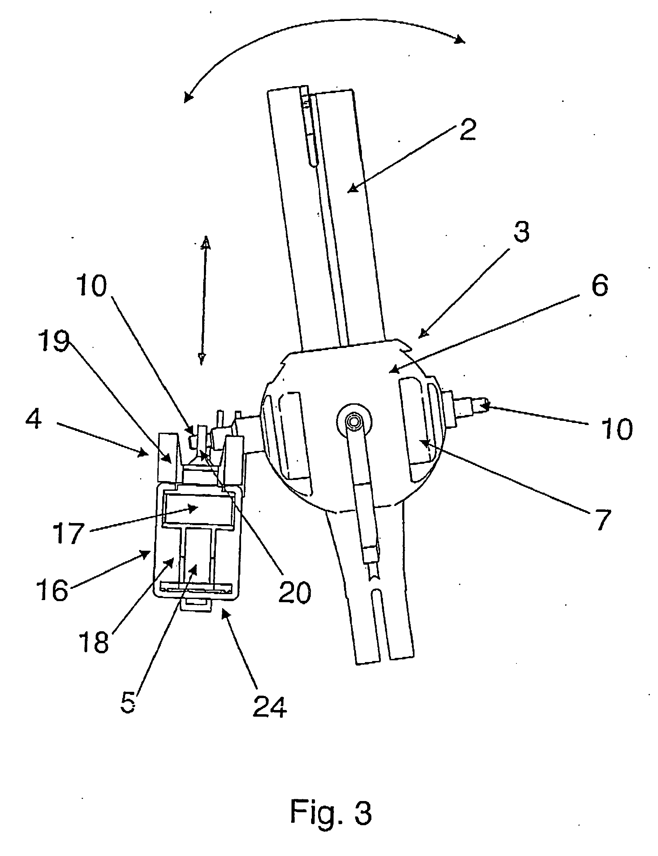

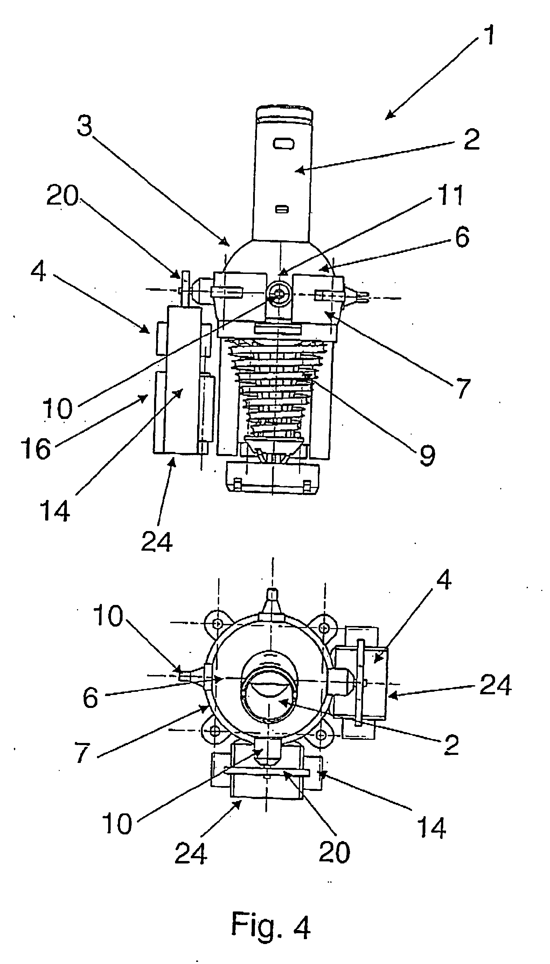

Das Rastelement 24 besteht aus einem Haftkörper 4 und einem Permanentmagneten 5, wie schematisch in Fig. 3 gezeigt ist, so daß die Magnetkraft wiederum durch das Zusammenwirken des magnetisierbaren Haftkörpers 4 mit dem Permanentmagneten 5 erzeugt ist. Dadurch wird die Rastkraft in der Raststellung durch die Magnetkraft zwischen dem Permanentmagneten 5 und dem Haftkörper 4 bewirkt. Zwischen dem Permanentmagneten 5 und dem Haftkörper 4 kann ein Luftspalt befindlich sein, der von der Magnetkraft überbrückt wird. Wie man durch Vergleich der Fig. 3 und der Fig. 4 sieht, ist der Haftkörper 4 in der neutralen Stellung der Handhabe 2 vom Permanentmagnet 5 entfernt. Damit steht der Haftkörper 4 mit dem Permanentmagneten 5 derart in Zusammenwirkung, daß der Haftkörper 4 in der neutralen Stellung der Handhabe 2 außerhalb des Wirkungsbereichs des Permanentmagneten 5 befindlich ist, so daß dort eine allenfalls geringfügige Magnetkraft auf die Handhabe 2 einwirkt. In der Schwenkstellung hingegen ist der Haftkörper 4 innerhalb des Wirkungsbereichs des Permanentmagneten 5 befindlich, was wiederum aus Fig. 3 ersichtlich ist, wobei die Magnetkraft als Rastkraft auf die Handhabe 2 einwirkt. Die Handhabe 2 bewegt beim Verschwenken den Haftkörper 4, derart daß der Haftkörper 4 in und/oder außerhalb des Wirkungsbereichs des Permanentmagneten 5 bringbar ist.

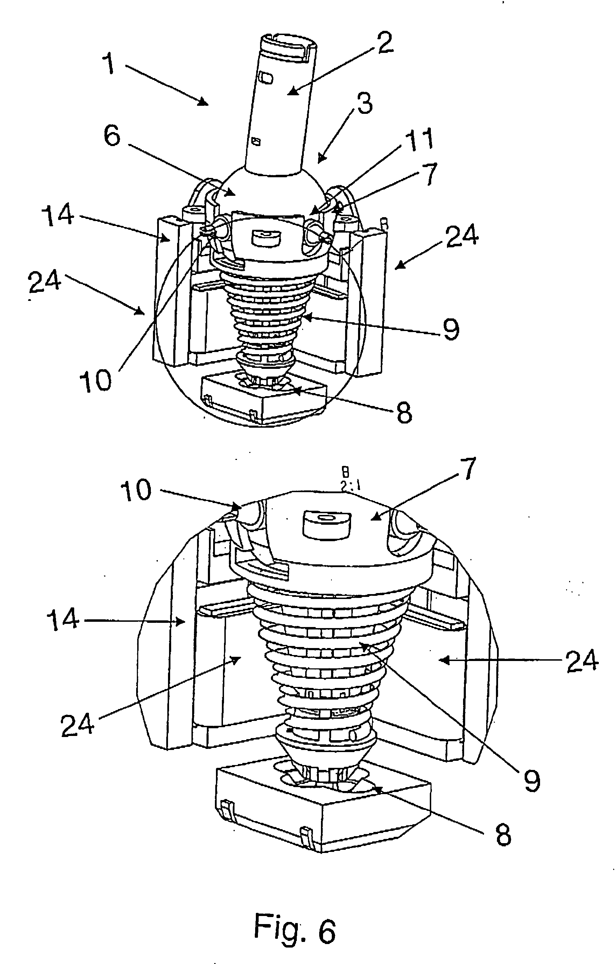

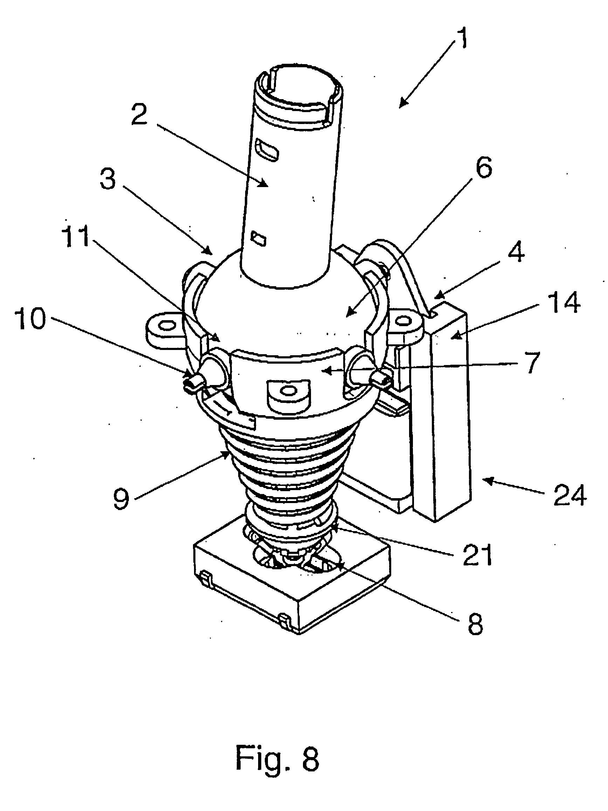

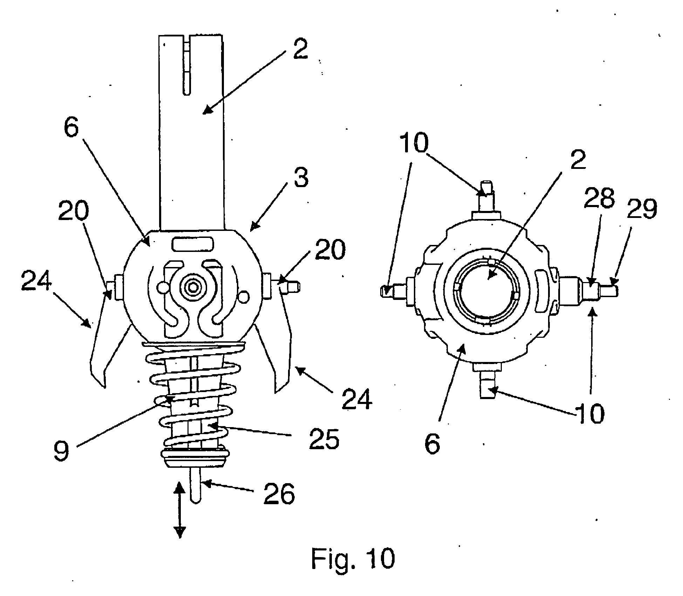

Das Verschwenkmittel 3 besteht aus einem in mehreren Richtungen beweglichen Drehkörper 6, womit die Handhabe 2 mittels des Drehkörpers 6 beweglich gelagert ist, wie man anhand von Fig. 8 erkennt. Der Drehkörper 6 ist in einer Lagerschale 7 in der Art eines Kugelgelenks gelagert. Die in etwa radial am Drehkörper 6 abstehende Handhabe 2 ist in einer Kulisse 8 geführt, wie man in Fig. 6 sieht. Beispielsweise kann die Kulisse 8 in etwa H-förmig, mehrfach H-förmig oder in sonstiger Weise ausgestaltet sein, wenn das Stellglied 1 als Gangwahlschalter in einem Kraftfahrzeug Verwendung findet. Mittels entsprechender Ausgestaltung der Kulisse 8 kann auch eine Haptik für die manuelle Bewegung der Handhabe 2 crzeugbar sein. Hierzu ist am Drehkörper 6 ein Ansatz 25 angeordnet, der der Handhabe 2 ungefähr gegenüberliegt und in etwa radial vom Drehkörper 6 absteht. Am Ansatz 25 ist ein Taststift 26 über eine Rückstellfeder 9 beweglich gelagert, wie in Fig. 10 zu sehen ist, wobei der Taststift 26 in die Kulisse 8 eingreift.

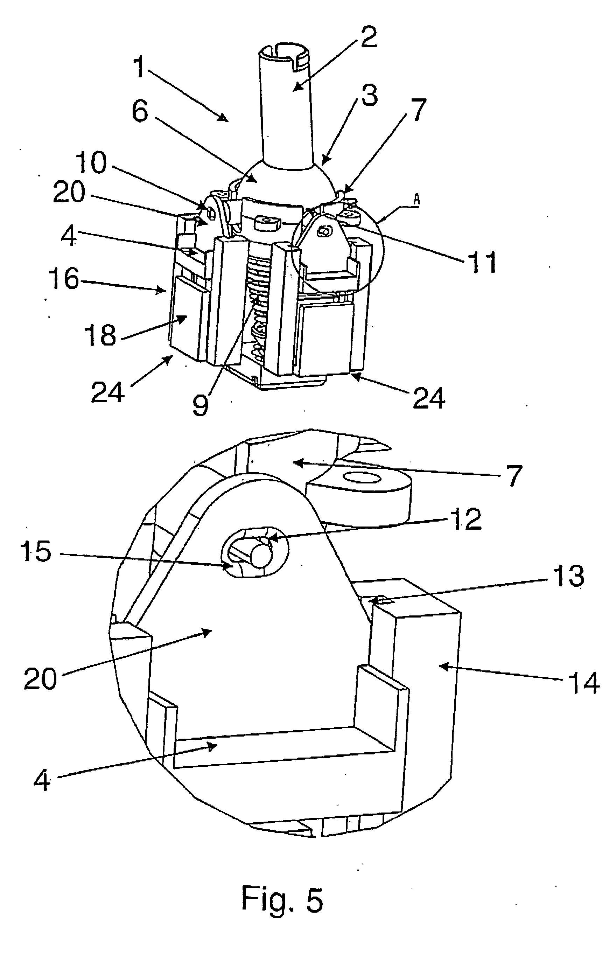

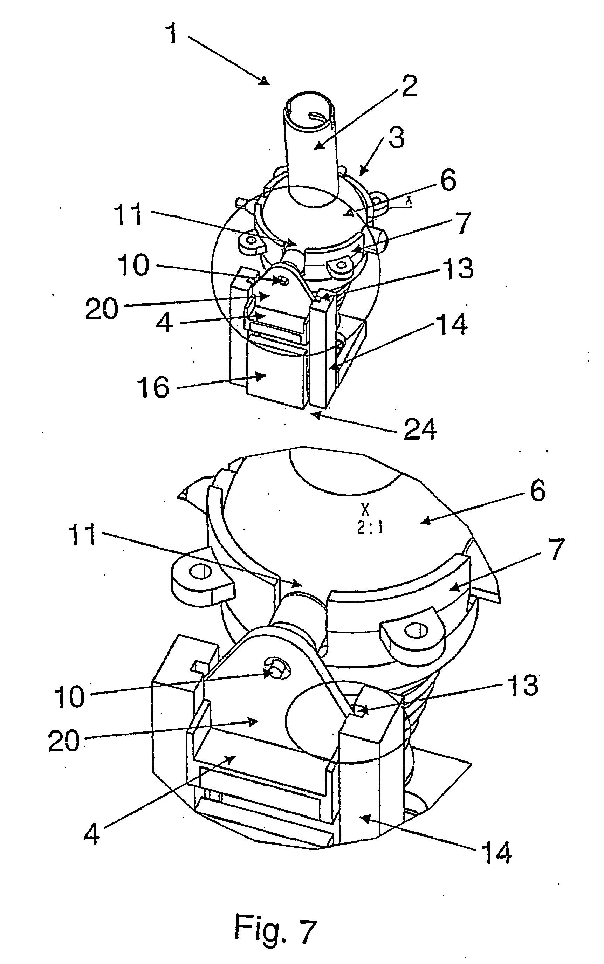

Wie in Fig. 7 zu sehen ist, ist für die Anlenkung des Verschwenkmittels 3 an das Rastelement 24 als Mittel zur Erzeugung der Rastkraft am Drehkörper 6 ein Stift 10 angebracht. Der Stift 10, der einen runden Querschnitt aufweist, durchgreift eine Aussparung 11 in der Lagerschale 7 und greift mittels eines verjüngten Endes 29 (siehe Fig. 10) in eine Bohrung 12 am Haftkörper 4 ein. Der Haftkörper 4 ist in einer Nut 13 an einer Halterung 14 linear geführt. Die Bohrung 12 ist mit einer Fase 15, einem Radius o. dgl. versehen, wobei die Fase 15, der Radius o. dgl. größer als der maximale Dreh- bzw. Verschwenkwinkel des Drehkörpers 6 ist, wie anhand von Fig. 5 zu erkennen ist.

Wie bereits erwähnt, weist die Handhabe 2 eine am abstehenden Ansatz 25 angeordnete Rückstellfeder 9 auf, die auch zur Rückstellung in die neutrale Stellung dient. Ein in Fig. 3 gezeigter Elektromagnet 16, der eine Spule 17 und einen Anker 18 umfaßt, wirkt mit dem Permanentmagneten 5 derart zusammen, daß zur Lösung des Haftkörpers 4 ein Gegenmagnetfeld erzeugbar ist. Durch Bestromung des Elektromagneten 16 löst sich somit die rastende Verbindung und die Handhabe 2 kann mittels der Rückstellfeder 9 wieder in deren Ausgangslage gebracht werden. Vorliegend ist der Permanentmagnet 5 am Elektromagnet 16 angeordnet. Selbstverständlich ist auch eine umgekehrte Anordnung möglich, indem der Permanentmagnet an einem Träger mittels des Verschwenkmittels 3 bewegbar und der Haftkörper stationär am Elektromagnet angeordnet ist.

Zur Erzeugung einer großen Rastkraft kann der Permanentmagnet 5 aus einem Neodym-Bor-Seltenerdmagnet bestehen. Der Haftkörper 4 ist in der Art eines Trägers 20 aus Kunststoff oder eines Kunststoffmantels ausgebildet, wobei der Träger 20 als Halterung zur Aufnahme eines Magnet-Flußlcitstücks 19 aus magnetisierbarem Metall dient. Der Träger 20 ist in der Nut 13 spielarm geführt.

Wie in Fig. 8 zu sehen ist, wirkt die Handhabe 2 mit einem Dämpfungselement 21 zusammen. Das Dämpfungselement 21 dient zur Geräusehreduxierung für das Anschlagen des Haftkörpers 4 am Permanentmagnet 5 und/oder für das Zurückstellen der Handhabe 2 in die neutrale Stellung. Das Dämpfungselement 21 ist am abstehenden Ansatz 25 angeordnet.

Wie bereits erwähnt, kann das Stellglied 1 als Gangwahlschalter für ein Kraftfahrzeug dienen, so daß das Stellglied 1 als Betätigungsorgan in einem in Fig. 9 gezeigten elektrischen und/oder elektronischen Schalter, insbesondere in der Art eines Joystick- oder Cursor-Schalters, angeordnet ist. Hierzu ist die Schwenkstellung des Stellglieds 1 als Schaltstellung ausgebildet, derart daß das Betätigungsorgan 1 in der Schaltstellung auf ein Schaltelement, Sensorelement 22, Signalelement o. dgl. zur Erzeugung eines Schaltsignals betätigend einwirkt. Das Sensorelement 22 besteht aus wenigstens einer magnetisierten Codeplatte 23 sowie wenigstens einem nicht weiter gezeigten, zugeordneten Hallsensor, der sich auf einer Leiterplatte 27 befindet. Die Codeplatte 23 ist derart an das Stellglied angelenkt, daß die Kipp- bzw. Verschwenkbewegung des Betätigungsorgans 1 in eine Linearbewegung der Codeplatte 23 in Bezug auf den Hallsensor umgewandelt wird. Die lineare Bewegung der Codeplatte 23 aufgrund der manuellen Bewegung der Handhabe 2 wird dann durch die Hall-Sensoren erfaßt. Es bietet sich dann weiter an, auf der Leiterplatte 27 die Auswerteelektronik für das Stellglied 1 anzuordnen.

Das Stellglied 1 eignet sich auch zum Steuern von funktional und gegenständlich voneinander getrennten Modulen, insbesondere von vier solcher Modulen, wie anhand von Fig. 10 weiter zu sehen ist.

Wie bereits erläutert, besitzt das Stellglied 1 eine manuell vom Benutzer bewegbare Handhabe 2 sowie ein Verschwenkmittel 3. Die Handhabe 2 wirkt mit dem Verschwenkmittel 3 derart zusammen, daß die Handhabe 2 in einer Verschwenkebene in wenigstens eine Richtung aus einer neutralen Stellung in eine Schwenkstellung verschwenkbar ist. In der Schwenkstellung wirkt nun die Handhabe 2 auf das in Fig. 10 schematisch gezeigte Modul 24 zur Ausführung einer Aktion betätigend ein. Entsprechend dem Ausführungsbeispiel besitzt nun die Handhabe 2 wenigstens zwei Schwenkstellungen, bevorzugterweise vier Schwenkstellungen. An der Handhabe 2 ist ein der jeweiligen Schwenkstellung zugeordnetes Übertragungselement 20 derart angelenkt, daß die Kipp-bzw. Verschwenkbewegung der Handhabe 2 im wesentlichen in eine Linearbewegung des Übertragungselements 20 entsprechend der Fig. 5 umgewandelt wird, wozu der Stift 10 am Drehkörper 6 in die Bohrung 12 am Übertragungselement 20 eingreift und das Übertragungselement 20 beispielsweise in einer Nut 13 geführt ist. Das aus Kunststoff bestehende Übertragungselement 20 wirkt dann in der jeweiligen Schwenkstellung der Handhabe 2 auf jeweils ein Modul 24 betätigend ein. Bevorzugterweise sind vier Module 24 unabhängig voneinander mittels vier Übertragungselementen 20 betätigbar.

Bei dem Modul kann es sich beispielsweise um das bereits erwähnte Schaltelement, Sensorelement 22, Signalelement o. dgl. gemäß Fig. 9 handeln, wobei die Codeplatte 23 am Übertragungselement 20 befestigt ist. Ebenso kann es sich bei dem Modul um das erwähnte magnetische Rastelement 24 entsprechend der Fig. 3 handeln, derart daß die Handhabe 2 in der Schwenkstellung verrastbar ist, wozu das Rastelement 24 in der beschriebenen Art und Weise am Übertragungselement 20 befestigt ist. Als weiteres Beispiel ist in Fig. 10 gezeigt, daß es sich bei dem Modul um ein einstückig mit dem Übertragungselement 20 ausgebildetes Riegelelement 24 handelt, derart daß die Handhabe 2 in der Schwenkstellung verriegelbar ist. Vor allem ist noch zu erwähnen, daß in der jeweiligen Schwenkstellung auch mehrere Module betätigbar sein können. Beispielsweise ist in Fig. 10 der rechts liegende Stift 10 mit zwei Verjüngungen 28, 29 gezeigt, so daß dort zwei Übertragungselemente 20 angeordnet werden können. Dadurch kann beispielsweise ein magnetisches Rastelement 24 sowie zusätzlich ein Sensorelement 22 in der diesem Stift 10 zugeordneten Schwenkstellung betätigt werden.

Ein derartiges Stellglied 1 läßt sich für einen Gangwahlschalter in Kraftfahrzeugen verwenden. Die Erfindung ist jedoch nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. Neben Kraftfahrzeuganwendungen kann ein derartiges Stellglied 1 in vorteilhafter Weise auch als Eingabemittel für Computer, Werkzeugmaschinen, Haushaltsgeräte o. dgl. eingesetzt werden.

### Bezugszeichen-Liste:

- 1 :: Stellglied / Betätigungsorgan
- 2:: Handhabe
- 3:: Verschwenkmittel
- 4:: Haftkörper
- 5:: Permanentmagnet
- 6:: Drehkörper
- 7:: Lagerschale
- 8:: Kulisse
- 9:: Rückstellfeder
- 10:: Stift
- 11:: Aussparung (in Lagerschale)
- 12:: Bohrung (im Haftkörper)
- 13:: Nut
- 14:: Halterung
- 15:: Fase
- 16:: Elektromagnet
- 17:: Spule
- 18:: Anker
- 19:: Magnet-Flußleitstück
- 20:: Träger / Übertragungselement
- 21:: Dämpfungselement
- 22:: Sensorelement
- 23:: Codeplatte
- 24:: Rastelement / Modul / Riegelelement
- 25:: Ansatz
- 26:: Taststift
- 27:: Leiterplatte
- 28,29:: Verjüngung (am Stift) / verjüngtes Ende

## Patentansprüche

1. Stellglied, insbesondere zur manuellen Ansteuerung von Funktionen in einem. Kraftfahrzeug, mit einer bewegbaren Handhabe (2) und mit einem Verschwenkmittel (3), wobei die Handhabe (2) mit dem Versehwenkmittel (3) derart zusammenwirkt, daß die Handhabe (2) in einer Verschwenkebene in wenigstens eine Richtung aus einer neutralen Stellung in eine Schwenkstellung verschwenkbar ist, wobei die Schwenkstellung als Raststellung ausgebildet ist, derart daß eine Rastkraft in der Schwenkstellung auf die Handhabe (2) einwirkt, und mit einem Elektromagneten und einem Haftkörper, wobei die Rastkraft durch eine Magnetkraft erzeugt ist, **dadurch gekennzeichnet, daß** das Stellglied einen Permanentmagneten aufweist und dadurch daß die Magnetkraft durch das Zusammenwirken des magnetisierbaren Haftkörpers (4) mit dem Permanentmagneten (5) erzeugt ist, derart daß der Haftkörper (4) in der neutralen Stellung der Handhabe (2) im wesentlichen außerhalb des Wirkungsbereichs des Permanentmagneten (5) befindlich ist, wobei eine allenfalls geringfügige Magnetkraft auf die Handhabe (2) einwirkt, sowie in der Schwenkstellung im wesentlichen innerhalb des Wirkungsbereichs des Permanentmagneten (5) befindlich ist, wobei die Magnetkraft als Rastkraft auf die Handhabe (2) einwirkt, und daß der Elektromagnet (16) mit dem Permanentmagneten (5) derart zusammenwirkt, daß zur Lösung des Haftkörpers (4) ein Gegenmagnetfeld erzeugbar ist

2. Stellglied nach Anspruch 1, **dadurch gekennzeichnet, daß** die Handhabe (2) wenigstens zwei Sehwenkstellungen besitzt, daß an der Handhabe (2) ein der jeweiligen Schwenkstellung zugeordnetes Übertragungselement (20) derart angelenkt ist, daß die Kipp-bzw. Verschwenkbewegung der Handhabe (2) im wesentlichen in eine Linearbewegung des Übertragungselemcnts (20) umgewandelt wird, und daß das Übertragungselement (20) in der jeweiligen Schwenkstellung der Handhabe (2) auf ein Modul (24) zur Ausführung einer Aktion betätigend einwirkt.

3. Stellglied nach Anspruch 1 oder 2, **dadurch gekennzeichnet, daß** die Handhabe (2) vier Senwenkstellungen in der Art einer Windrose besitzt, und daß vier Module (24) unabhängig voneinander mittels vier Übertragungselementen (20) betätigbar sind.

4. Stellglied nach Anspruch 1, 2 oder 3, **dadurch gekennzeichnet, daß** die Rastkraft in der Raststellung durch die Magnetkraft zwischen dem Permanentmagnet (5) und dem Haftkörper (4) über einen zwischen dem Permanentmagnet (5) und dem Haftkörper (4) befindlichen Luftspalt bewirkt ist.

5. Stellglied nach einem der Anspruche 1 bis 4, **dadurch gekennzeichnet, daß** die Handhabe (2) beim Verschwenken den Haftkörper (4) bewegt, derart daß der Haftkörper (4) in und/oder außerhalb des Wirkungsbereichs des Permanentmagneten (5) bringbar ist.

6. Stellglied nach einem der Ansprüche 1 bis 5, **dadurch gekennzeichnet, daß** daß Verschwenlanittel (3) aus einem in mehreren Richtungen bewegliche Drehkörper (6) besteht, daß der Drehkörper (6) in der Art eines Kugelgelenks in einer Lagerschale (7) gelagert ist, und daß die Handhabe (2) in etwa radial abstehend am Drehkörper (6) angeordnet ist.

7. Stellglied nach einem der Ansprüche 1 bis 6, **dadurch gekennzeichnet, daß** ein der Handhabe (2) ungefähr gegenüberliegender, in etwa radial abstehender Ansatz (25), der in einer Kulisse (8) geführt ist, am Drehkörper (6) angeordnet ist, und daß mittels der Kulisse (8) eine Haptik für die manuelle Bewegung der Handhabe (2) erzeugbar ist

8. Stellglied nach einem der Ansprüche 1 bis 7, **dadurch gekennzeichnet, daß** am Drehkörper (6) ein Stift (10) angebracht ist, daß der Stift (10) eine Aussparung (11) in der Lagerschale (7) durchgreift, und daß der Stift (10) in eine Bohrung (12) am Haftkörper (4) und/oder am Übertragungselement (20) eingreift.

9. Stellglied nach einem der Ansprüche 1 bis 8, **dadurch gekennzeichnet, daß** der Stift (10) mit einem runden Querschnitt sowie mit einem verjüngenden Ende (28, 29) versehen ist.

10. Stellglied nach einem der Ansprüche 1 bis 9, **dadurch gekennzeichnet, daß** die Bohrung (12) mit einer Fase (15) oder einem Radius versehen ist, wobei die Fase (15) oder der Radius größer als der maximale Dreh- bzw. Verschwenkwinkel des Drehkörpers (6) ausgebildet ist.

11. Stellglied nach einem der Ansprüche 1 bis 10, **dadurch gekennzeichnet, daß** der Haftkörper (4) und/oder das Übertragungselement (20) in einer Nut (13) spielarm linear geführt ist.

12. Stellglied nach einem der Ansprüche 1 bis 11, **dadurch gekennzeichnet, daß** das Übertragungselement (20) aus Kunststoff besteht.

13. Stellglied nach einem der Ansprüche 1 bis 12, **dadurch gekennzeichnet, daß** die Handhabe (2) eine am abstehenden Ansatz (25) angeordnete Rückstellfeder (9) zur Rückstellung in die neutrale Stellung aufweist.

14. Stellglied nach einem der Ansprüche 1 bis 13, **dadurch gekennzeichnet, daß** der Permanentmagnet (5) am Elektromagnet (16) angeordnet ist.

15. Stellglied nach einem der Ansprüche 1 bis 14, **dadurch gekennzeichnet, daß** der Elektromagnet (16) eine Spule (17) und einen Anker (18) umfaßt.

16. Stellglied nach einem der Ansprüche 1 bis 15, **dadurch gekennzeichnet, daß** der Permanentmagnet (5) aus einem Neodym-Bor-Seltenerdmagnet besteht

17. Stellglied nach einem der Ansprüche 1 bis 16, **dadurch gekennzeichnet, daß** der Haftkörper (4) in der Art eines Trägers (20) aus Kunststoff tür eine Halterung (14) zur Aufnahme eines Magnet-Flußleitstücks (19) aus magnetisierbarem Metall ausgebildet ist.

18. Stellglied nach einem der Ansprüche 1 bis 17, **dadurch gekennzeichnet, daß** die Handhabe (2) mit einem Dämpfungselement (21) zur Gerauschreduzierung für das Anschlagen des Haftkörpers (4) am Permanentmagnet (5) und/oder für das Zurückstellen in die neutrale Stellung zusammenwirkt.

19. Stellglied nach einem der Ansprüche 1 bis 18, **dadurch gekennzeichnet, daß** das Dämpfungselement (21) am abstehenden Ansatz (25) angeordnet ist.

20. Stellglied nach einem der Ansprüche 1 bis 19, **dadurch gekennzeichnet, daß** es sich bei dem Modul (24) um ein Schaltelement, Sensorelement (22) oder Signalelement zur Erzeugung eines Schaltsignals handelt

21. Stellglied nach einem der Ansprüche 1 bis 20, **dadurch gekennzeichnet, daß** das Sensorelement (22) aus wenigstens einer magnetisierten Codeplatte (23) sowie wenigstens einem zugeordneten Hallsensor besteht, und daß die Codeplatte (23) am Übertragungselement (20) befestigt ist.

22. Stellglied nach einem der Ansprüche 1. bis 21, **dadurch gekennzeichnet, daß** es sich bei dem Modul (24) um ein Riegelelement handelt, derart daß die Handhabe (2) in der Schwenkstellung verriegelbar ist, und daß das Riegelelement (24) am Übertragungselement (20) befestigt ist und/oder mit dem Übertragungselement (20) zusammenwirkt.

23. Stellglied nach einem der Ansprüche 1 bis 22, **dadurch gekennzeichnet, daß** es sich bei dem Modul (24) um ein Rastelement handelt, derart daß die Handhabe (2) in der Schwenkstellung verrastbar ist, und daß das Rastelement (24) am Übertragungselement (20) befestigt ist und/oder mit dem Übertragungselement (20) zusammenwirkt.

24. Elektrischer und/oder elektronischer Schalter, insbesondere in der Art eines Joystick- oder Cursor-Schalters, beispielsweise elektronischer Gangwahlschalter für ein Kraftfahrzeug, mit einem Stellglied (1) nach einem der vorhergehenden Ansprüche als Betätigungsorgan.

25. Schalter nach Anspruch 24, **dadurch gekennzeichnet, daß** die Schwenkstellung des Stellglieds (1) als Schaltstellung ausgebildet ist, derart daß das Stellglied (1) in der Schaltstellung auf ein Schaltelement, Sensorelement (22) oder Signalelement betätigend zur Erzeugung eines Schaltsignals einwirkt.

26. Schalter nach Anspruch 24 oder 25, **dadurch gekennzeichnet, daß** das Sensorelement (22) aus wenigstens einer magnetisierten Codeplatte (23) sowie wenigstens einem zugeordneten Hallsensor besteht, und daß die Codeplatte (23) derart an das Stellglied (1) angelenkt ist, daß die Kipp- bzw. Verschwenkbewegung des Stellglieds (1) in eine Linearbewegung der Codeplatte (23) in Bezug auf den Hallsensor umgewandelt wird.

## Claims

1. Actuator, in particular for the manual control of functions in a motor vehicle, with a movable handle (2) and with a rotating unit (3), wherein the handle (2) works together with the rotating unit (3) such that the handle (2) is rotatable in a rotating plane in at least one direction from a neutral position into a rotatable position, wherein the rotatable position is designed as an locking position, such that a locking force acts on the handle (2) in the rotatable position, and with an electromagnet and an adhesive body, wherein the locking force is generated by a magnetic force, **characterised in that** the actuator comprises a permanent magnet and **in that** the magnetic force is generated by the interaction of the magnetisable adhesive body (4) with the permanent magnet (5), such that the adhesive body (4) is located in the neutral position of the handle (2) essentially outside the range of effectiveness of the permanent magnet (5), wherein if need be a slight magnetic force acts on the handle (2) and in the rotatable position is located essentially within the range of effectiveness of the permanent magnet (5), wherein the magnetic force acts as a locking force on the handle (2), and **in that** the electromagnet (16) acts together with the permanent magnet (5) such that to release the adhesive body (4) a counter magnetic field can be produced.

2. Actuator according to claim 1, **characterised in that** the handle (2) has at least two rotatable positions, **in that** on the handle (2) a transmission element (20) assigned to the respective rotatable position is articulated such that the coupling or rotatable movement of the handle (2) is converted essentially in a linear movement of the transmission element (20), and **in that** the transmission element (20) has an actuating effect in the respective rotatable position of the handle (2) on a module (24) for performing an action.

3. Actuator according to claim 1 or 2, **characterised in that** the handle (2) has four pivot positions in the manner of a wind rose, and **in that** four modules (24) can be actuated independently of one another by means of four transmission elements (20).

4. Actuator according to claim 1, 2 or 3, **characterised in that** the locking force in the locking position is produced by the magnetic force between the permanent magnet (5) and the adhesive body (4) via an air gap located between the permanent magnet (5) and the adhesive body (4).

5. Actuator according to one of claims 1 to 4, **characterised in that** the handle (2) moves on rotating the adhesive body (4) such that the adhesive body (4) can be moved into and/or out of the range of effectiveness of the permanent magnet (5).

6. Actuator according to one of claims 1 to 5, **characterised in that** the rotatable unit (3) consists of a rotating body (6) that can be moved in several directions, **in that** the rotatable body (6) is mounted in the form of a spherical joint in a bearing shell (7) and **in that** the handle (2) is arranged extending radially on the rotatable body (6).

7. Actuator according to one of claims 1 to 6, **characterised in that** a projection (25) protruding radially approximately opposite the handle (2), which projection is guided in a slide (8), is arranged on the rotatable body (6), and **in that** by means of the slide (8) haptics can be generated for the manual movement of the handle (2).

8. Actuator according to one of claims 1 to 7, **characterised in that** on the rotatable body (6) a pin (10) is attached, **in that** the pin (10) passes through a recess (11) in the bearing shell (7), and **in that** pin (10) engages in a bore (12) on the adhesive body (4) and/or on the transmission element (20).

9. Actuator according to one of claims 1 to 8, **characterised in that** the pin (10) is provided with a round cross section as well as with a tapering end (28, 29).

10. Actuator according to one of claims 1 to 9, **characterised in that** the bore (12) is provided with a chamfered edge (15) or a radius, wherein the chamfered edge (15) or the radius is greater than the maximum rotational or pivot angle of the rotatable body (6).

11. Actuator according to one of claims 1 to 10, **characterised in that** the adhesive body (4) and/or the transmission element (20) is guided play-free linearly in a groove (13).

12. Actuator according to one of claims 1 to 11, **characterised in that** the transmission element (20) is made of plastic.

13. Actuator according to one of claims 1 to 12, **characterised in that** the handle (2) comprises a restoring spring (9) arranged on the protruding projection (25) for restoring into the neutral position.

14. Actuator according to one of claims 1 to 13, **characterised in that** the permanent magnet (5) is arranged on the electromagnet (16).

15. Actuator according to one of claims 1 to 14, **characterised in that** the electromagnet (16) comprises a coil (17) and an armature (18).

16. Actuator according to one of claims 1 to 15, **characterised in that** the permanent magnet (5) consists of a neodymium-boron rare earth magnet.

17. Actuator according to one of claims 1 to 16, **characterised in that** the adhesive body (4) is designed in the form of a support (20) made of plastic for a holder (14) for mounting a magnet forward conductance piece (19) made of magnetisable metal.

18. Actuator according to one of claims 1 to 17, **characterised in that** the handle (2) works together with a damping element (21) for reducing the noise of the adhesive body (4) hitting the permanent magnet (5) and/or for restoring into the neutral position.

19. Actuator according to one of claims 1 to 18, **characterised in that** the damping element (21) is arranged on the protruding projection (25).

20. Actuator according to one of claims 1 to 19, **characterised in that** the module (24) consists of a switching element, sensor element (22) or signal element for generating a switching signal.

21. Actuator according to one of claims 1 to 20, **characterised in that** the sensor element (22) is made from at least one magnetisable code plate (23) and at least one assigned Hall sensor and **in that** the code plate (23) is secured onto the transmission element (20).

22. Actuator according to one of claims 1 to 21, **characterised in that** the nodule (24) is a locking element such that the handle (2) can be locked in the pivot position, and **in that** the locking element (24) is secured onto the transmission element (20) and/or cooperates with the transmission element (20).

23. Actuator according to one of claims 1 to 22, **characterised in that** the module (24) is a locking element, such that the handle (2) can be locked in the pivot position and **in that** the locking element (24) is secured onto the transmission element (20) and/or works together with the transmission element (20).

24. Electrical and/or electronic switch, in particular in the form a joystick or a cursor switch, for example an electronic gear selection switch for a motor vehicle with an actuator (1) according to one of the preceding claims as the actuating member.

25. Switch according to claim 24, **characterised in that** the pivot position of the actuator (1) is designed as a shift position, such that the actuator (1) in the switching position acts on a switching element, sensor element (22) or signal element for generating a switching signal.

26. Switch according to claim 24 or 25, **characterised in that** the sensor element (22) consists of at least one magnetisable code plate (23) and at least one assigned Hall sensor, and **in that** the code plate (23) is articulated onto the actuator (1) such that the tilting or pivoting movement of the actuator (1) is converted into a linear movement of the code plate (23) in relation to the Hall sensor.

## Revendications

1. Actionneur notamment pour la commande manuelle de fonctions d'un véhicule automobile comportant :
- une mannette (2) mobile et un moyen de basculement (3), la mannette (2) coopérant avec le moyen de basculement (3) de façon qu'elle puisse être basculée dans un plan de basculement dans au moins une direction à partir d'une position neutre vers une position basculée,
la position basculée étant réalisée comme position d'accrochage, de façon qu'une force d'accrochage agisse sur la mannette (2) en position basculée, et
un électro-aimant et un organe d'accrochage,
la force d'accrochage étant générée par une force magnétique,
**caractérisé en ce que**
l'actionneur comporte un aimant permanent et
la force magnétique est générée par la coopération de l'organe d'accrochage aimanté (4) et de l'aimant permanent (5) de façon que
- l'organe d'accrochage (4) se trouve pratiquement en dehors de la zone d'action de l'aimant permanent (5) en position neutre de la mannette (2)
* toutefois une force magnétique toujours légère agissant sur la mannette (2) et la position de basculement, est au moins pratiquement à l'intérieur de la zone d'action de l'aimant permanent (5),
* la force magnétique agissant comme force d'accrochage sur la mannette (2) et que
- l'électro-aimant (16) coopère avec l'aimant permanent (5) pour générer un champ magnétique antagoniste pour libérer l'organe d'accrochage (4).

2. Actionneur selon la revendication 1,
**caractérisé en ce que**
- la mannette (2) comporte au moins deux positions de basculement,
- la mannette (2) est articulée à l'élément de transmission (20) associé à chaque position de basculement de façon que le mouvement de basculement ou mouvement de pivotement de la mannette (2) soit transformé pratiquement en un mouvement linéaire de l'élément de transmission (20) et
- l'élément de transmission (20) dans la position basculée respective de la mannette (2), agit dans le sens de la confirmation sur le module (24) pour exécuter une action.

3. Actionneur selon la revendication 1 ou 2,
**caractérisé en ce que**
la mannette (2) à quatre positions de basculement selon une rose des vents et
quatre modules (24) sont actionnés indépendamment l'un de l'autre par quatre éléments de transmission (20)

4. Actionneur selon la revendication 1, 2 ou 3,
**caractérisé en ce que**
la force d'accrochage en position d'accrochage est générée par la force magnétique exercée entre l'aimant permanent (5) et l'organe d'accrochage (4) par l'intermédiaire de l'entre-fer entre l'aimant permanent (5) et l'organe d'accrochage (4).

5. Actionneur selon l'une des revendications 1 à 4,
**caractérisé en ce que**
la mannette (2) déplace l'organe d'accrochage (4) lorsqu'elle bascule de façon que l'organe d'accrochage (4) arrive dans et/ou en dehors de la zone d'action de l'élément permanent (5).

6. Actionneur selon l'une des revendications 1 à 5,
**caractérisé en ce que**
le moyen de basculement (3) se compose d'un organe rotatif (6) mobile dans plusieurs directions,
- l'organe rotatif (6) est monté dans une coupelle de palier (7) à la manière d'une articulation à rotule et
- la mannette (2) se trouve sensiblement en saillie dans la direction radiale sur l'organe rotatif (6).

7. Actionneur selon l'une des revendications 1 à 6,
**caractérisé en ce qu'**
un organe rotatif (6) comporte un prolongement (25) sensiblement en saillie dans la direction radiale, sensiblement en regard de la mannette (2), et qui est guidé dans une coulisse (8), et
la coulisse (8) génère un fonctionnement haptique pour le mouvement manuel de la mannette (2).

8. Actionneur selon l'une des revendications 1 à 7,
**caractérisé en ce que**
l'organe rotatif (6) comporte une broche (10) traversant un dégagement (11) de la coupelle de palier (7) et
la broche (10) pénètre dans un perçage (12) de l'organe d'accrochage (4) et/ou de l'élément de transmission (20).

9. Actionneur selon l'une des revendications 1 à 8,
**caractérisé en ce que**
la broche (10) a une section circulaire avec une extrémité (28, 29) allant en diminuant.

10. Actionneur selon l'une des revendications 1 à 9,
**caractérisé en ce que**
le perçage (12) a un congé (15) ou un rayon,
le congé (15) ou le rayon étant plus grand que l'angle de rotation ou le basculement maximal de l'organe rotatif (6).

11. Actionneur selon l'une des revendications 1 à 10,
**caractérisé en ce que**
l'organe d'accrochage (4) et/ou l'élément de transmission (20) ont un guidage linéaire à faible jeu dans une rainure (13).

12. Actionneur selon l'une des revendications 1 à 11,
**caractérisé en ce que**
l'élément de transmission (20) est en matière plastique.

13. Actionneur selon l'une des revendications 1 à 12,
**caractérisé en ce que**
la mannette (2) comporte un ressort de rappel (9) sur le prolongement en saillie (25) pour être rappelée en position neutre.

14. Actionneur selon l'une des revendications 1 à 13,
**caractérisé en ce que**
l'élément permanent (5) est prévu sur l'électro-aimant (16).

15. Actionneur selon l'une des revendications 1 à 14,
**caractérisé en ce que**
l'électro-aimant (16) comporte une bobine (17) et un induit (18).

16. Actionneur selon l'une des revendications 1 à 15,
**caractérisé en ce que**
l'élément permanent (5) est en un aimant Néodym-Bor-Terre Rare.

17. Actionneur selon l'une des revendications 1 à 16,
**caractérisé en ce que**
l'organe d'accrochage (4) est réalisé à la manière d'un support (20) en matière plastique pour une fixation (14) recevant une pièce conductrice de flux magnétique (19) en un métal aimanté.

18. Actionneur selon l'une des revendications 1 à 17,
**caractérisé en ce que**
la mannette (2) coopère en position neutre avec un élément amortisseur (21) pour réduire le bruit de la venue en butée de l'organe d'accrochage (4) contre l'élément permanent (5) et/ou le rappel en position neutre.

19. Actionneur selon l'une des revendications 1 à 18,
**caractérisé en ce que**
l'élément amortissemeur (21) est prévu sur le prolongement en saillie (25).

20. Actionneur selon l'une des revendications 1 à 19,
**caractérisé en ce que**
le module (24) est un élément de commutation, un élément de capteur (22) ou un élément générant un signal de commutation.

21. Actionneur selon l'une des revendications 1 à 20,
**caractérisé en ce que**
l'élément de capteur (22) se compose d'au moins une plaque de codage aimantée (23) ainsi que d'au moins un capteur à effet Hall et
la plaque de codage (23) est fixée à l'élément de transmission (20).

22. Actionneur selon l'une des revendications 1 à 21,
**caractérisé en ce que**
le module (24) est un élément de verrouillage de façon que la mannette (2) puisse être verrouillée en position basculée et
l'élément de verrouillage (24) est fixé à l'élément de transmission (20) et/ou coopère avec l'élément de transmission (20).

23. Actionneur selon l'une des revendications 1 à 22,
**caractérisé en ce que**
le module (24) est un élément d'accrochage de façon que la mannette (2) puisse être accrochée en position basculée et
l'élément d'accrochage (24) est fixé à l'élément de transmission (20) et/ou coopère avec l'élément de transmission (20).

24. Commutateur électrique et/ou électronique notamment de type baguette magique ou commutateur à curseur par exemple un sélecteur électronique de rapport de vitesses de véhicule automobile comportant un actionneur (1) selon l'une des revendications précédentes comme organe d'actionnement.

25. Commutateur selon la revendication 24,
**caractérisé en ce que**
la position de basculement de l'organe d'actionnement (1) est une position de commutation de façon que l'organe d'actionnement (1) en position de commutation agit sur l'élément de commutation, un élément de capteur (22) ou un élément générateur de signal en confirmation de la génération d'un signal de commutation.

26. Commutateur selon la revendication 24 ou 25,
**caractérisé en ce que**
l'élément de capteur (22) se compose d'au moins une plaque de codage aimantée (23) ainsi que d'au moins un capteur à effet Hall, associés et la plaque de codage (23) est articulée sur l'actionneur (1) pour que le mouvement de basculement ou de pivotement de l'actionneur (1) soit transformé en un mouvement linéaire de la plaque de codage (23) par rapport au capteur à effet hall.
